# EUROPEAN PATENT APPLICATION

(11) **EP 4 831 699 A1**
(43) Date of publication of application: **28.10.2026**
(21) Application number: 25171757.5
(22) Date of filing: 22.04.2025
(51) Int. Cl.: G02B 1/16, G02B 5/08

(54) **OPTICAL COMPONENT FOR GUIDING AT LEAST ONE LASER BEAM, LASER MACHINING HEAD, METHOD FOR PRODUCING AN OPTICAL COMPONENT**

(71) Applicant: Bystronic Laser AG, 3362 Niederönz (CH)
(72) Inventor: SCHEIDIGER, Simon, 4900 Lagenthal (CH); NAZARI HAGHIGHI PASHAKI, Maryam, 8038 Zurich (CH); SCHACHTLER, Daniel, 9630 Wattwil (CH); BENZ, Rico, 9462 Montlingen (CH)
(74) Representative: Patentanwälte Geyer, Fehners & Partner mbB

(57) **Abstract**

An optical component 10 for guiding at least one laser beam 101 emitted by a laser source of at least 1 kW is provided, including a substrate 12 having at least one optical surface 14 and a coating 16 on the optical surface, wherein the coating 16 has a dust repellent surface layer 18 including at least one transparent conductive oxide and having a thickness of less than 10 µm. A laser machining head is also provided.

## Description

The invention is directed to an optical component for guiding at least one laser beam emitted by a laser source of at least 1 kW, a laser machining head for laser machining a metal workpiece with at least one laser beam emitted by a laser source of at least 1 kW, and a method for producing an optical component.

The invention relates to the technology field of laser machining heads for laser machining a workpiece, in particular processes for thermal cutting of materials and processes for welding by means of laser radiation. The laser machining head with its optical components is a central element in this technology field and guides and shapes the laser beam tool on the workpiece, e.g. on a sheet metal.

Optical components of laser machining heads, which are suitable for (ultra)high-power laser applications in various laser systems, e.g. laser processing machines, are typically the most important components for obtaining reliability and longevity of the laser machining head. During laser machining a low optical loss and a high laser induced damage threshold (LIDT) at optically effective surfaces are advantageous. A low optical loss indicates that an optical component efficiently performs its intended function, either by reflecting or transmitting most of the laser light. For reflective components, this corresponds to high reflectivity; for transmissive components this corresponds to high transmissivity. Optical losses arise from mechanisms such as scattering and absorption, either in the optical coatings or within the bulk material. In most cases, however, the coatings are more relevant for optical loss than the substrate, since they are exposed to the highest field intensities and are more susceptible to absorption, defects, and manufacturing-induced imperfections. The Laser-Induced Damage Threshold (LIDT) defines the maximum laser fluence or intensity that an optical component can withstand without sustaining permanent and irreversible damage, typically limited by the coating performance. Extreme heat load on optical components may result in a delamination of coating on the optical component due to thermal expansion, which also leads to laser-induced damage. Moreover, a deformation of optically effective surfaces, e.g. of a mirror or a lens, can be thermally induced. In addition, a thermal shift of the focus of the laser beam may be observed. Due to excess heat load, de-bonding of laser beam reflecting mirrors which are bonded to a platform for Dynamic Beam Shaping (DBS) and, in case of a DBS platform which moves mirrors by piezo actuators, an overheating of the piezo system can result.

Current mitigating strategies addressing heat accumulation issues mainly rely on reducing the symptoms by means of decreasing the heat load on optical components and may vary based on the type of laser optics and their environment. One method for reducing heat load focuses on water cooling which can be optimized in combination with micro channelling, as mentioned in T. Wei, L. Zhang, M. Asheghi, and K. E. Goodson, "Embedded Micro-channel Cooling Technique to Minimize Thermal Deformation of X-ray and High-power Laser Optics," in Journal of Physics: Conference Series, Institute of Physics, 2022. doi: 10.1088/1742-6596/2380/1/012071; or P. Hu, H. Zhu, and C. He, "Optimization design of water-cooled mirror for low thermal deformation," Appl Therm Eng, vol. 73, no. 1, pp. 598-607, Dec. 2014, doi: 10.1016/j.applthermaleng.2014.07.052. However, these approaches have drawbacks such as complications in their implementation, increased operating costs, possible optics damage due to water leakage, and low cooling efficiency. Also, sometimes water cooling cannot be applied, especially in the case of moving optics like fast steering mirrors for Dynamic Beam Shaping (DBS), which is a technology for improving process efficiency and quality, particularly in the field of laser cutting. Besides, such known solutions for heat management are also not compatible with dichroic optics that are necessary in some applications, e.g. for in-line process monitoring by a sensor or camera.

Laser optics with low optical losses and high LIDT can be produced using different designs and technologies, such as described in David Blázquez Sánchez, "Scanning device with coated mirror element and laser processing head having the same," US 2023/0152575 A1, May 18, 2023; or K. Kiedrowski, M. Jupé, M. Kennedy, H. Ehlers, A. Wienke, and D. Ristau, "High power laser-induced damage investigations of mirrors with several substrate materials in combination with heat transfer simulations," in Proc. SPIE 12142, Fiber Lasers and Glass Photonics: Materials through Applications III, SPIE, 2022, p. 121420F. doi: 10.1117/12.2621132. In industry, typical technologies for laser optics are interference coating designs including low loss dielectric materials deposited by means of ion beam sputtering (IBS) as a coating technology. For instance, low loss highly reflective mirrors provide maximum reflectivity in a certain wavelength range and a certain angle of incidence. The high reflectivity of dielectric mirrors (also known as Bragg mirrors) is based on the principle of constructive interference of light reflected from multiple interfaces within a dielectric layer stack. This same interference principle is also employed in multilayer anti-reflection (AR) coatings, where the stack is engineered to minimize reflectivity by promoting destructive interference at targeted wavelengths. The coating materials are typically two or more materials with different indices of refraction composed into a stack on the substrate as thin layers having a thickness of a few nm to a few hundred nm or some µm, or a material that gradually increases and decreases the index of refraction periodically or non-periodically, so called chirped coatings, as described in Kaiser N., & Pulker, H. K. (Eds.). (2003), Optical interference coating, Springer; or in MacLeod, H. A. (2017), Thin-Film Optical Filters (5th ed.) CRC Press.

Optical components, e.g. mirrors, lenses or windows, in laser machining heads can be damaged due to dust particles on optically effective surfaces of the optical components, which leads to dust burn-in and heat load due to accumulated, in particular local, absorption of laser radiation. Moreover, an optical loss can occur within an optical layer system of the optically effective surface, due to intrinsic or defect-related absorption, e.g. due to impurities within the optical layer system. Thus, a sufficient resistance of optical components to contamination is desired. A progressive dust accumulation on the optically effective surface increases laser light absorption, resulting in a temperature rise and introducing laser-induced damage, especially in high-power laser operation, see e.g. Z. Lou et al., "The characterization of laser-induced thermal damage mechanism of mid-infrared optical coatings with surface contaminants," Phys Scr, vol. 95, no. 3, Feb. 2020, doi: 10.1088/1402-4896/ab4a4f. Additionally, scattering caused by surface roughness or adsorbed dust particles reduces optical efficiency and contributes to thermal load, both within the optical component and in its surrounding environment.

Approaches to obtain dust repellent properties of optical components depend on the type and size of dust and its environment. Fine dust, such as metal particles or airborne dust, may get charged and stuck to the optics through electrostatic and Van der Waals forces, as mentioned in L. Wang, M. Liu, Y. Wu, and H. Zheng, "Progress in Studies of Surface Nanotextures and Coatings with Nanomaterials on Glass for Anti-Dust Functionality," Oct. 01, 2022, MDPI. doi: 10.3390/nano12203677. Some known dust repellent surfaces are intended to reduce the adhesion forces between dust and the coating by creating micro-/nanotextures on the substrate surface, see e.g. Y. Lee, E. A. You, and Y. G. Ha, "Facile one-step construction of covalently networked, self-healable, and transparent superhydrophobic composite films," Appl Surf Sci, vol. 445, pp. 368-375, Jul. 2018, doi: 10.1016/j.apsusc.2018.03.201; or A. Syafiq, A. K. Pandey, V. Balakrishnan, and N. A. Rahim, "Study on self-cleaning performance and hydrophobicity of TiO2/silane coatings," Pigment & Resin Technology, vol. 53, no. 1, pp. 1-9, Jan. 2024, doi: 10.1108/PRT-02-2018-0010. Other known dust repellent surfaces are based on an application of low energy coatings, which increase the coating scattering and absorption and are therefore not suitable for high laser power applications, as e.g. described in S. Taheri et al., "The effect of surface chemistry on anti-soiling properties of transparent perfluoroalkyl and alkyl modified silica coatings," Surfaces and Interfaces, vol. 30, Jun. 2022, doi: 10.1016/j.surfin.2022.101824; J. Zhang, W. Wang, S. Zhou, H. Yang, and C. Chen, "Transparent dust removal coatings for solar cell on mars and its Anti-dust mechanism," Prog Org Coat, vol. 134, pp. 312-322, Sep. 2019, doi: 10.1016/j.porgcoat.2019.05.028; G. Polizos et al., "Anti-soiling and highly transparent coatings with multi-scale features," Solar Energy Materials and Solar Cells, vol. 188, pp. 255-262, Dec. 2018, doi: 10.1016/j.solmat.2018.09.011; or Y. Y. Quan; or L. Z. Zhang, "Experimental investigation of the anti-dust effect of transparent hydrophobic coatings applied for solar cell covering glass," Solar Energy Materials and Solar Cells, vol. 160, pp. 382-389, Feb. 2017, doi: 10.1016/j.solmat.2016.10.043.

Moreover, according to further approaches, anti-static coatings are applied on the optical component, which are used to reduce surface resistance enabling charge dissipation, e.g. mentioned in L. Wang, M. Liu, Y. Wu, and H. Zheng, "Progress in Studies of Surface Nanotextures and Coatings with Nanomaterials on Glass for Anti-Dust Functionality," Oct. 01, 2022, MDPI. doi: 10.3390/nano12203677; or M. Fenero, J. Palenzuela, I. Azpitarte, M. Knez, J. Rodríguez, and R. Tena-Zaera, "Laponite-Based Surfaces with Holistic Self-Cleaning Functionality by Combining Antistatics and Omniphobicity," ACS Appl Mater Interfaces, vol. 9, no. 44, pp. 39078-39085, 2017, doi: 10.1021/acsami.7b13535.

Anti-dust properties may be achieved using transparent conductive oxides (TCO) films, e.g. Indium Tin Oxide (ITO), Indium Zinc Oxide (IZO), or Tin Dioxide (SnO₂), see for instance J. Zhang, W. Wang, S. Zhou, H. Yang, and C. Chen, "Transparent dust removal coatings for solar cell on mars and its Anti-dust mechanism," Prog Org Coat, vol. 134, pp. 312-322, Sep. 2019, doi: 10.1016/j.porgcoat.2019.05.028; US6852406 B2; or T. Ytzhaki, S. Joseph, E. Kasis, I. Yadin, and A. Sheinman, "Transparent Dust Repellent Coating for Sapphire," 2016. Another approach using TCO are Electrodynamic Dust Shields (EDS), where a combination of an electromagnetic field with TCO, and electrodes are used to create a traveling wave electric field to push away the dust from surfaces, see for instance "Self-Cleaning Coatings for Space or Earth Transparent Electrodynamic Dust Shields Usable for Solar Cells." available in www.nasa.gov; or C. I. Callea, C. R. Buhler, J. L. Mcfall, and S. J. Snyder, "Particle Removal by Electrostatic and Dielectrophoretic Forces for Dust Control During Lunar Exploration Missions". Such solutions are mainly used for panels and optics and not for high power laser optics.

Using continuous TCO layers for conductivity and transparency is a passive solution to dissipate the accumulated charge of the dust particles that are attached to the optics, so that the dust particles can be released from the surface with minimum force, such as small gas flow or mirror vibration, e.g. R. B. Williams, R. Tanimoto, A. Simonyan, and S. Fuerstenau, "Vibration Characterization of Self-Cleaning Solar Panels with Piezoceramic Actuation," 2007. The conductivity of TCO layers, necessary for charge dissipation of particles, can be modified by e.g. varying the doping and the oxygen content of the TCO layer. Changing the conductivity in return can change light absorption of the TCO layer and charge dissipation time on the optics.

In typical industrial applications, TCO layers either have a high thickness, i.e. more than few hundreds of nm, or have a high surface roughness. Therefore, these layers are not compatible with low optical loss optics, as they increase absorption of incident light and also affect other properties, particularly LIDT, as mentioned in M. Steinecke et al., "Electrical and optical properties linked to laser damage behavior in conductive thin film materials," Opt Mater Express, vol. 11, no. 1, p. 35, Jan. 2021, doi: 10.1364/ome.410081; or J. E. Medvedeva, "Combining Optical Transparency with Electrical Conductivity: Challenges and Prospects".

The aim to be achieved is to provide an optical component and a laser machining head which each allow high power laser applications.

This aim is achieved by an optical component according to claim 1, a laser machining head according to claim 11, and a method for producing an optical component according to claim 15.

One embodiment is directed to an optical component for guiding at least one laser beam emitted by a laser source of at least 1 kW, including a substrate having at least one optical surface and a coating on the optical surface, wherein the coating has a dust repellent surface layer including at least one transparent conductive oxide (TCO) and having a thickness of less than 10 µm.

By the dust repellent TCO surface layer of the coating on the optical surface, the TCO surface layer having a thickness below 10 µm, surprisingly a low optical loss and a high LIDT of the optical component during high power laser applications can be achieved. The absorption of laser light caused by dust and particles on the surface of the optical component and a resulting heat accumulation in the optical component can be avoided or at least reduced. In addition, scattering of laser light resulting from dust and particles on the surface can be reduced. At the same time, absorption and scattering by the TCO surface layer remain within the range acceptable for kW-laser application, which also may be due to the small thickness of the TCO surface layer, the level of conductivity, low defect density and/or low surface roughness of the TCO surface layer. Further, due to the TCO, the heat conduction of the surface is promoted. As a result, the heat accumulation in the optical component during laser exposure is reduced. Laser induced damage of the optical component and of its surface can be reduced or avoided even at high laser power or high laser fluence. Thus, by the optical component of embodiments, during high energy laser applications optical loss can be reduced and a desirably high LIDT can be obtained. By the optical component of embodiments, an optical loss of less than 100 ppm, preferably less than 10 ppm, at wavelengths of the laser beam in the range of UV-VIS to IR, preferably 800 to 1100 nm, more preferably in the range of 1030 to 1080 nm, can be achieved.

In embodiments and modifications thereof, the coating can have at least one TCO dust repellent surface layer of less than 0.5 µm. Moreover, between the TCO dust repellent surface layer and the substrate, there can be zero to many intermediate layers. The substrate can be amorphous, crystalline or polycrystalline. The substrate can be e.g. amorphous in high-power laser optics.

Crystalline or polycrystalline substrates can also be used, such as sapphire (crystalline) or ZnS (polycrystalline), or CaF₂. The layers of the coating, i.e. the dust repellent surface layer and/or the intermediate layers, can be amorphous or polymorphous. Dielectric thin films (e.g., SiO₂, Ta₂O₅, HfO₂, Al₂O₃, TiO₂) can be deposited using PVD techniques (e.g., ion-beam sputtering, e-beam evaporation, magnetron sputtering), which tend to create amorphous or nanocrystalline structures. Amorphous coatings can be preferred because they reduce scattering due to lack of grain boundaries, offer better homogeneity, are less prone to laser-induced damage.

By minimizing optics losses to less than 100 ppm, preferably less than 10 ppm, undesired effects due to laser-induced heat can be mitigated, thereby improving or maintaining LIDT as well as overall efficiency. Anti-static properties of the dust repellent surface layer help to avoid dust on the surface of the optical component, to remove dust with less force from the surface, and to decrease the probability of dust accumulation which can occur due to accumulated electrostatic charges on the optics surface. Therefore, localized heat load points on the optics are avoided. In addition, the higher heat conductivity of TCOs in comparison to dielectrics that are used for interference layers promotes the localized heat dissipation around the dust location.

The term "guiding at least one laser beam" includes at least partially transmitting and/or at least partially reflecting the laser beam. The optical component can be used for guiding a continuous wave laser beam and/or pulsed laser beam emitted by a laser source. The optical component can be an at least partially reflective optical component, such as a reflective, antireflective or dichroic mirror. The optical component may be an at least partially transmissive optical component, such as a window, a lens or a protection cover, such as a protective glass. The substrate may be an optical grade substrate. The material of the substrate can be selected from e.g. fused silica, borosilicate glass, e.g. N-BK7^{®} (a borosilicate crown glass manufactured by Schott AG), silicon carbide (SiC), Silicon (Si), Sapphire, Diamond, glass-ceramic, e.g. ZERODUR^{®} glass-ceramic (a lithium aluminium silicon oxide glass ceramic manufactured by Schott AG), metals, and polymers. The optical surface of the substrate can be understood as a surface of the uncoated substrate. The optical surface of the substrate is to be provided with optical properties for an interaction with the laser beam. The uncoated optical surface can be of optical grade, preferably superpolished and/or having a surface roughness s_{q}<0.2nm (RMS). The coated optical surface, i.e. the optical surface provided with the coating, can be an optically effective surface of the optical component, at which the laser beam is incident and/or which is exposed to the laser beam. The coated optical surface can be understood as an optically effective surface of the optical component, where the laser beam is transmitted and/or reflected. The dust repellent surface layer including at least one transparent conductive oxide can also be called TCO surface layer or surface layer. The TCO surface layer can be understood as the top, terminating and/or outermost layer of the coating on the optical surface. The TCO surface layer can be at the very surface as the top, terminating and/or outermost layer of the coating. Alternatively, the coating may just include the TCO surface layer, e.g. in case of a window. The coating can include several layers, e.g. a stack of layers, such as interference layers, having the TCO surface as a top layer. The TCO surface layer can include one or more transparent conductive oxides. The stack of layers can include one or more intermediate TCO layers. The intermediate TCO layers can each include one or more transparent conductive oxides.

The surface layer can have a thickness of less than 10 µm, preferably less than 100 nm, more preferably less than 20 nm or 10 nm. For instance, the thickness of the surface layer can be less than 5 µm. The thickness of the surface layer may be in a range of 1 nm to 9 µm, preferably 1.5 nm to 2 µm, more preferably 1.5 nm to 0.5 µm, even more preferably 2 nm to 100 nm, even more preferably 3 nm to 20 nm. The thickness of the coating can be in a range of 1 nm to 100 µm, preferably 2 nm to 50 µm, more preferably 3 nm to 10 µm. The thickness of the coating can be chosen depending on the optical requirements. For instance, the thickness of the coating can be several micrometer or less, such as in a range of 1.5 nm to 100 µm, and the thickness of the TCO surface layer can be sub-micrometer.

The surface layer can have a surface roughness of less than 0.5 nm, preferably less than 0.2 nm, more preferably less than 0.1 nm. The surface roughness of the surface layer may be in the range of 0.05 nm to 0.4 nm, preferably 0.07 to 0.2 nm, more preferably 0.1 nm to 0.12 nm, e.g. 0.05 nm to 0.07 nm. The surface roughness can be less than 0.4nm, preferably less than 0.2nm, more preferably less than 0.1nm, e.g. less than 0.07nm. This reduces the heat load on the optically effective surface of the optical component and promotes a low optical loss and a high LIDT of the optical component. Thereby, scattering of laser light due to surface roughness can be reduced or maintained low. This is beneficial for a low optical loss and a high LIDT of the optical component.

The coating can include at least one intermediate layer between the substrate and the surface layer, the intermediate layer being selected from a dielectric layer, an optical functional layer, a low optical loss layer, a layer of low index of refraction, a layer of high index of refraction, a layer including at least one transparent conductive oxide (TCO), and any combination thereof. The low index of refraction can be n < 1.6. The high index of refraction can be n > 1.9. In some modifications, the intermediate layer can have an index of refraction in the range of 1.6 ≤ n ≤ 1.9.

The intermediate layers selected from a dielectric layer and an optical functional layer can include or can be formed of a dielectric material having a high or a low refractive index. The dielectric material can e.g. be selected from Ta2O5, HfO2, ZrO2, Al2O3, TiO2, Y2O5, SiO2, MgF2, CaF2, Al2O3, TiN, ZrN, HfN, TaN, AIN, Si3N4, AIN, TiN, GaN, and any combination thereof.

The coating can include at least one, e.g. one to ten, intermediate layers including at least one transparent conductive oxide, also called intermediate TCO layers. Thereby, the heat conduction of the coating can be promoted. For instance, one or more intermediate TCO layers can each be arranged between dielectric layers and/or functional optical layers. The intermediate TCO layers can each be formed of one transparent conductive oxide.

The intermediate layer(s) being a dielectric layer and/or an optical functional layer can be called interference layer(s). For instance, the reflectivity of the optical component can be based on the interference of laser light reflected from different layers of a stack of dielectric layers, providing high reflectivity or low reflectivity. A dielectric layer, an optical functional layer or a stack of such layers can be configured to set the optical properties of the optically effective surface of the optical component, such as reflection, transmission, absorption, based on interference of laser light and intrinsic properties of the layer, such as thickness and the material.

Providing intermediate TCO layers in between the interference layers can promote heat management. One or more TCO layers can e.g. each be embedded inside the dielectric multilayers at a local minimum, preferably near a node, of the electric field of the laser beam to have the minimum absorption. Thereby, the coating can be provided as an electric field optimized coating design. The heat conductivity can be increased by the intermediate TCO layer(s) and light absorption can be reduced by the design of some or each of the coating layers, in particular by the electric field optimized coating design. Hence, a low steady state temperature of the optical component can be obtained or maintained in comparison to optics without any intermediate TCO layers or optics without an electric field optimized coating design. Moreover, heat conductivity on the surface of the optical component can be increased because of the TCO surface layer. In addition, the design of the coating, e.g. the electric field optimized coating design, can control absorption in the TCO surface layer.

At least one of the intermediate layers selected from the dielectric layer, the optical functional layer, the low optical loss layer, the layer of low index of refraction, and the layer of high index of refraction and at least one of the intermediate layers including at least one transparent conductive oxide can be arranged between the substrate and the surface layer.

The transparent conductive oxide can be selected from Indium Tin Oxide (ITO), Indium Zinc Oxide (IZO), Gallium doped Zinc Oxide (GZO), In₂O₃:H (IOH), Zinc Oxide (ZnO), Tin Dioxide (SnO₂) and any combination thereof. The transparent conductive oxide can also be selected from Indium Oxide doped with Molybdenum (InO:Mo), Indium Oxide doped with Titanium (InO:Ti ), Aluminum-doped Zinc Oxide (AZO), Titanium-doped Zinc Oxide (ZnO:Ti ), Antimony-doped Tin Oxide (ATO),Tantalum-doped Tin Oxide (SnO:Ta), Niobium-doped Tin Oxide (SnO:Nb), Fluorine-doped Tin Oxide (FTO), Nb-doped Titanium Dioxide (TiO₂:Nb), Zirconium doped indium oxide (InO:Zr), Zinc Tin Oxide (ZTO), Niobium doped Anatase (TiO₂: NTO). For dust repellent properties, only one TCO can be included in the surface layer.

At least one layer of the surface layer and the at least one intermediate layer which includes a transparent conductive oxide can each have an electrical resistivity less than 10¹² ohm/square, preferably 10 to 10¹¹ ohm/square, more preferably 10⁵ to 10⁸ ohm/square. The electrical resistivity of less than 10¹² ohm/square, i.e. the reduced electrical resistivity, goes hand in hand with increased heat conductivity and the anti-dust repellent properties. This improves an effective heat load management on the optically effective surface of the optical component and a high LIDT of the optical component.

In some examples, the coating can include 1 to 250 intermediate layers. The coating can include 1 to 10 intermediate layers of an antireflective optical function. Moreover, the coating can include 20 to 100 intermediate layers of a reflective optical function.

In some modifications of the optical component, the dust repellent surface layer and the at least one intermediate layer can form a stack on the optical surface, the stack having a thickness of 2 nm to 100 µm, preferably 3 to 10 µm. Thus, the coating can include a stack of at least one of the dielectric intermediate layers and the TCO surface layer as a top layer, the stack also called optical interference coating. The dielectric layers underneath the terminating TCO surface layer can fulfil an optical specification e.g. for HR (High Reflective) mirrors, dichroic mirrors or AR (Anti Reflective) optics. Several dielectric materials can be used with low and high index of refraction. The layer structure of the dielectric layers can include layers of alternating high and low refractive index materials. The number of dielectric layers can be one or up to 100 or even more.

At least one layer selected from the surface layer and the at least one intermediate layer including a transparent conductive oxide can be a layer provided in a position within the coating to interact with a minimum of the electrical field of the laser beam and having a thickness of 1 nm to 10 µm. The coating can be configured so that the at least one TCO layer has a position to interact with a minimum of the electric field of the laser beam. Thereby, the TCO surface layer's exposure to the laser light can be reduced, e.g. by finetuning the individual layers thicknesses in the entire coating design.

Two or more of the intermediate layers can have different indices of refraction. Further, two or more of the intermediate layers can be arranged to have alternating low and high refractive indices. In some examples, the coating can include two or more intermediate layers arranged to have a periodically or non-periodically index of refraction and/or arranged to have a gradually varying index of refraction, so called rugate filter, e.g. gradually increasing and/or decreasing index of refraction.

The optical component can be an at least partially reflective optical component selected from a mirror, a highly reflective mirror, and a dichroic mirror. The optical component can be an at least partially transmissive optical component selected from a window, a window at least partially transmitting UV, visible, to near infrared light, a window having the surface layer including the at least one transparent conductive oxide (TCO) directly deposited on the optical surface, a dichroic mirror, a dichroic mirror at least partially transmitting UV, visible to near infrared light, a lens, and a protection cover. The coating may include at least one intermediate layer having an optical function selected from a dichroic optical function, a reflective optical function, an antireflective optical function, a polarizing optical function and any combination thereof.

The optical component can be configured for guiding at least one laser beam emitted by a laser source selected from a high power laser source, a laser source emitting a pulsed laser radiation, a laser source emitting a continuous wave laser radiation, a laser source emitting laser radiation in a spectral range from visible light to near infrared light, a laser source emitting laser radiation in a spectral range from high energy visible light to mid infrared light, and any combination thereof.

A further embodiment relates to a method for producing an optical component, the optical component configured for guiding a laser beam having laser energies of laser sources of 1kw or more, including the steps: providing a substrate having at least one optical surface; forming a coating on the at least one optical surface, the coating having a dust repellent surface layer, wherein the dust repellent surface layer is formed by deposition of a transparent conductive oxide (TCO) and is formed having a thickness of less than 10 µm. The method can be performed for producing an optical component for guiding at least one laser beam, the optical component being according to any of the preceding embodiments, modifications and examples. The dust repellent surface layer of the coating can be formed by depositing a surface layer including at least one transparent conductive oxide (TCO) and having a thickness of less than 10 µm on the optical surface or on the optical surface coated with the intermediate layers mentioned above. The method can include depositing the intermediate layers on the optical surface of the substrate. The method can be configured to provide the above mentioned features and properties of the optical component. In some examples, the method can include forming the coating on the optical surface by ion beam sputtering (IBS), atomic layer deposition (ALD), magnetron sputtering, or evaporation, e.g. PVD or CVD.

Another embodiment relates to a laser machining head for laser machining a metal workpiece with at least one laser beam emitted by a laser source having a power of at least 1 kW, including a laser beam entry point and a laser beam exit point; and a laser guiding device having optics for guiding the laser beam in between the laser beam entry point and the laser beam exit point; wherein the optics includes at least one optical component according to any of the preceding embodiments, modifications and examples.

Using the above laser machining head for high energy laser applications, due to the optical component included, optical loss can be reduced and a desirably high LIDT can be obtained. Furthermore, the durability and longevity of the laser machining head can be increased due to the optical component, which provides an improvement of the LIDT due to a low optical loss <100 ppm, in combination with dust repellent properties. The laser machining head can be used for laser machining a workpiece, in particular for laser cutting or laser welding of materials, e.g. metal sheets.

The optical component can be arranged in the laser machining head such that the laser beam is incident at the coated optical surface of the substrate, and thereby at the optically effective surface of the optical component, and/or such that the coated optical surface is exposed to the laser beam.

The laser guiding device can include a dynamic beam shaping (DBS) system for dynamically oscillating the laser beam in a direction lateral to its propagation direction. The DBS system may include a piezoelectric system or a galvo mirror system for oscillating the laser beam. The DBS system can oscillate the laser beam with high frequencies, e.g. more than 0.5 kHz, preferably 1 to 10 kHz.

The laser machining head can have an cleaning system for cleaning an optically effective surface of the optical component, including at least one component selected from a device for vibrating the optical component or the optically effective surface, a device for directing air flow onto the optically effective surface, a device emitting a high frequency alternating electromagnetic field for oscillating charged particles, and a device emitting a static electromagnetic field for polarizing neutral particles. By these modifications of the laser machining head, the optically effective surface of the optical component can be cleaned to reduce dust contamination, additionally supporting the dust repellent properties of the coating having the TCO surface layer.

In the laser machining head the optical component can be an at least partially reflective optical component and/or an at least partially transmissive optical component.

By embodiments, modifications and examples of the optical component an optical coating design for (ultra)high-power laser applications can be realized providing a high LIDT (Laser Induced Damage Threshold) and an improved durability, for instance by a dust repellent surface layer on top of a low loss interference layer design. Thereby, anti-dust properties can be implemented and optical losses, in terms of absorption and scattering, can be minimized to less than 100 ppm, preferably less than 10 ppm. This leads to an improved reliability and performance of the optical component while maintaining high LIDT in a (ultra)high-power laser machining head. In some examples, a thin layer of a transparent conductive oxide, TCO, e.g. IZO, ITO, with low surface roughness, e.g. <0.1 nm, is applied as a terminating layer on an interference coating design including low and high index materials as low optical loss layers.

The optical component of embodiments, modifications and examples can have a reflective coating for use as high reflective mirrors for high and (ultra)high-power continuous wave (CW) lasers. The optical component can have an anti-reflective coating for transparent optics for high power CW laser application or for transparent optics for high and ultra-high power pulsed laser application. The optical component allows to implement dust repellent properties to CW laser optics and pulsed laser optics.

The embodiments and modifications of the optical component can be used in the embodiments and modifications of the laser machining head. With the above embodiments and modifications of the laser machining head, the same advantages and functions can be achieved as with the embodiments and modifications of the optical component, in particular with identical and/or analogous features.

In embodiments, modifications and examples of the optical component, parameters were determined by the following measuring devices and methods. The thicknesses of single layers was determined after deposition of the layers by Atomic Force Microscopy (AFM). The AFM device used for thickness measurements was CoreAFM from Nanosurf. The thickness measurements were performed in tapping mode with a frequency of 170 kHz and with a scan area of approximately 25 µm × 25 µm. The AFM probe was Tap190AI-G from Budgetsensors (Tip radius 10 nm). The force constant (stiffness) was 48 N/m. To prepare the samples for thickness measurements, a step edge, defined as a clear boundary between the coated and uncoated regions, was created. The AFM tip then scanned across this step. Then a linear background was subtracted, calculated by a planar fit on one side of the step. After that, the layer thickness was calculated by the difference between the mean heights of the planes on both sides of the step, and the height difference between the two areas was used to determine the film thickness. The surface roughness was also measured by the AFM device CoreAFM from Nanosurf, the measurements performed in tapping mode with a frequency of 170 kHz and with a scan area of approximately 15 µm × 15 µm. The electrical resistivity was measured by a standard four-point probe technique. A CMT-SR2000N fully automatic fourpoint probe station from AIT Co., LTD was utilized at ambient temperature. In the examples, the definition of defect density, also called particle density, is the density of particles through the scanning of the surface of the optical component. Polyamide particles with an average size of 50 µm were brought onto the surface of exemplary optical components using a sieve with a hole size of 0.5mm in diameter. Samples were shaken afterwards to remove the imposed particles. Almost the entire surface of the optical component (a 20 mm region of a 1 inch diameter substrate) was scanned and imaged using an automatic xyz Lica microscope (Leica DM4000 M LED with a 20x DIC objective). 250 images were taken (image size 1421*931 um). For the defect detection, the simple blob detection from the open CV image library was used. Coordinate and size of each particle was analyzed and saved. The optical loss was determined by the cavity ring-down (CRD) technique as a standard method for measuring very high-reflectance optics with reflectivity R>99.95%. The CRD measurements followed the ISO 13142:2015 standard. Laser induced deflection (LID) is a method to measure absorption of single and multi-layers and coatings at selected wavelengths. Total integrated scattering (TIS) was used to measure the loss due to scattered laser light and is described in ISO 13696:2002. The LIDT (Laser-Induced Damage Threshold) defines the maximum energy density (J/cm² for pulsed lasers) or maximum power density (W/cm² for continuous-wave lasers) that an optical component can withstand without sustaining permanent damage or a visible change of the irradiated area. In the embodiments and examples, the LIDT was determined with a continuous wave laser beam at 1070 nm at a 45° angle of incidence with a 150 µm beam diameter. All measurements were conducted in accordance with ISO 21254. Using a pulsed laser beam, the LIDT was determined at 1064 nm with a 360 µm beam diameter for the pulsed laser and at 45° angle of incidence, the pulse duration was 6.8 ns (FWHM).

It is understood that the above-mentioned features and those to be explained below can be used not only in the combinations indicated, but also in other combinations or on their own, without departing from the scope of the present invention. Upper boundaries of indicated parameter ranges can be combined with lower boundaries of other indicated parameter ranges of the same parameter type. Lower boundaries of indicated parameter ranges can be combined with upper boundaries of other indicated parameter ranges of the same parameter type. This also holds for parameter ranges indicated as preferred and not indicated as preferred.

In the following, the invention will be explained in more detail on the basis of exemplary embodiments with reference to the accompanying drawings. These exemplary embodiments are used for illustration purposes only and are not to be construed as limiting. Elements or components of different exemplary embodiments can be combined with one another, unless otherwise indicated. Modifications and variations which are described for one of the exemplary embodiments can also be applied to other exemplary embodiments. To avoid repetition, elements that are the same or that correspond to one another are denoted by the same reference signs in different figures and are not explained more than once. The figures are schematic and the dimensions of elements shown are not to scale. The drawings show in:
- Fig. 1: schematically a first example of an optical component;
- Fig. 2: schematically a third example of an optical component;
- Fig. 3: a diagram illustrating the defect density of examples;
- Fig. 4a: an example of a laser machining head;
- Fig. 4b: an example of a laser machining head;
- Fig. 5: an example of a laser machining head;
- Fig. 6: an example of a laser machining head;
- Fig. 7: an example of a laser machining head, and
- Fig. 8: schematically an example of a method for producing an optical component.

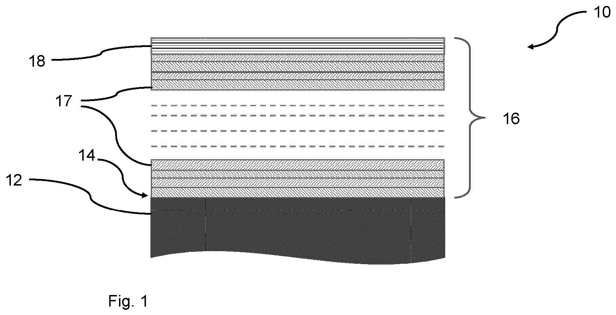

Fig. 1 schematically illustrates a cross-sectional view of a first example of an optical component 10 for guiding at least one laser beam emitted by a laser source of at least 1 kW. The optical component 10 includes a substrate 12 formed of amorphous fused silica, having a surface roughness < 0.4 nm and having an optical surface 14 and an amorphous and quasiamorphous coating 16 on the optical surface 14. The coating 16 includes in this example as intermediate layers 17 (shown by solid layers and interrupted lines) 60 layers of dielectric Ta₂O₅ (high refractive index and SiO₂ (low refractive index) having alternating low and high refractive indices, to provide an optical interference of laser light resulting in this example in a high reflectivity. The coating 16 has a surface layer 18 of Indium Tin Oxide (ITO), which is a transparent conductive oxide (TCO). The thickness of the coating 16 is about 10µm. The surface layer 18 has a thickness of 20 nm.

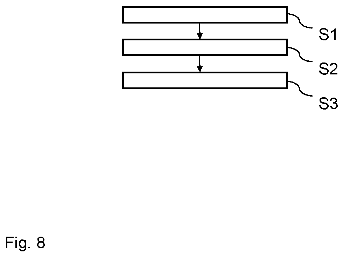

The optical component 10 was produced as schematically shown in Fig. 8 by a method, including a first step S1 wherein a substrate having at least one optical surface is provided and a second step S2 wherein a coating on the at least one optical surface is formed, the coating having a dust repellent surface layer, wherein the dust repellent surface layer is formed by deposition of ITO as transparent conductive oxide (TCO) and is formed having a thickness of 20 nm (third step S3).

The coating 16 and the surface layer 18 were deposited on the optical surface 14 of the substrate 12 by Ion Beam Sputtering (IBS), also called Dual Beam Ion Sputtering. The base pressure was <3×10-8 Torr, the deposition pressure was <3×10-4 Torr. The O2 flow rate for SiO2 was 25 sccm, the O2 flow rate for Ta2O5 was 43 sccm, the O2 flow rate for ITO or IZO was 5.5 sccm. The O2 flow rate inside the ion source for SiO2 and Ta2O5 deposition was 12 sccm. Ion deposition voltage for SiO2 and Ta2O5 deposition was 1250 V at an ion deposition current for SiO2 and Ta2O5 deposition of 600 mA. Accelerator voltage for SiO2 and Ta2O5 was 250V. Deposition temperature was 100 °C. The ion deposition voltage for ITO was 1000 V. The ion deposition current for ITO was 300 mA. The accelerator voltage for ITO deposition was 300 V. The intermediate layers were annealed for 14 hours at 400 °C before deposition of the ITO surface layer.

The thicknesses were determined by AFM and calibrated for exemplary layers, and controlled by the deposition rate for the coating 16 and for the surface layer 18. The electrical resistivity of the surface layer 18 of the first example was 40 ohm/square, determined by CMT-SR2000N. The reflection (CRD) at 45° and 1064 nm was 99.978%.The optical loss at component 10 was 220 ppm, measured by CRD following the ISO 13142:2015 standard. The LIDT of component 10 was determined to be >5.7x10⁷ W/cm².

As a second example, an optical compound 11 (not shown) was produced, which was a modification of the first example. In this example, the coating 16 was not annealed. In contrast to optical compound 10 of the first example, the electrical resistivity of the surface layer 18 of the second example was determined to be 1.7×10⁴ ohm/square by CMT-SR2000N. The electrical resistivity of optical component 11 was larger than that of optical component 10. The reflection (CRD) at 45° and 1064 nm was 99.992%. The optical loss at component 11 was 80 ppm, measured by CRD following the ISO 13142:2015 standard. The LIDT of component 11 was determined to be > 5.7×10⁷ W/cm². Therefore, the optical loss at optical component 11 was lower than that of component 10 and the LIDT of optical component 11 was comparable to that of optical component 10.

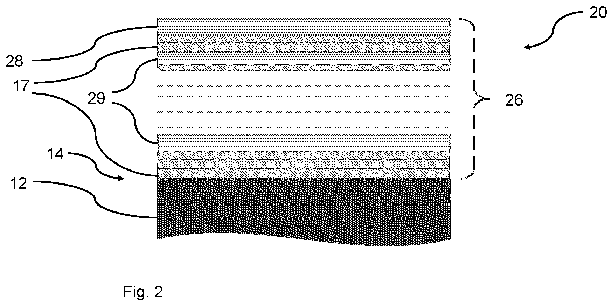

Fig. 2 schematically shows a cross sectional view of a third example of an optical component 20 for guiding at least one laser beam emitted by a laser source of at least 1 kW. The optical component 20 includes a substrate 12 formed of amorphous fused silica, having an optical surface 14 and an amorphous coating 26 on the optical surface 14. The coating 26 includes in this example as intermediate layers 17 (shown by solid layers and interrupted lines) 60 layers of dielectric Ta2O5 (high refractive index) and SiO₂ (low refractive index) having alternating low and high refractive indices, to provide in this example an optical interference of laser light for high reflectivity. The coating 26 further has a surface layer 28 of Indium Tin Oxide (ITO). Between Ta₂O₅ layers, 10 intermediate TCO layers 29 of Indium Tin Oxide (ITO) are provided, two of the intermediate layers 29 are shown in Fig. 2. The thickness of the coating 26 is about 10 µm. The surface layer 28 has a thickness of 20 nm and the intermediate ITO layers 29 each have a thickness of 2 nm. The coating 26, the intermediate ITO layers 29 and the surface layer 28 were deposited on the optical surface 14 of the substrate 12 by IBS in the same way as in the first example.

Further examples (not shown) of the optical component are formed in line with the first or the second example, however including Indium Zinc Oxide (IZO) instead of ITO. These examples also revealed low optical losses and high LIDTs. Other examples of the optical component are formed as lenses, windows, or protective glasses, which were embodied as the first or the second example, have instead of a reflective design of the dielectric intermediate layers 17 an antireflective design thereof, and revealed low optical losses and high LIDTs.

Two comparative examples (not shown in the figures) were provided. A first comparative example of a comparative optical component 30 is an uncoated substrate 12. A second comparative example of a comparative optical component 40 is a substrate 12 coated with 59 layers of dielectric Ta₂O₅ and SiO₂ which were annealed for 14 hours at 400°C. The amorphous and quasimorphous 59 layers have alternating low and high refractive indices with low and high refractive indices, respectively, to provide a highly reflective mirror for the laser beam. Thus, comparative example 40 includes nearly the same dielectric layers on substrate 12 as the first example, but no TCO surface layer. The reflection (CRD) at 45° and 1064 nm was determined to be 99.995%. The optical loss at component 40 was 50 ppm, measured by CRD following the ISO 13142:2015 standard. The LIDT of component 40 was determined to be > 5.7×10⁷ W/cm².

The optical components of the first example, of the modification of the first example, and of the first and second comparative examples, i.e. the optical compounds 10, 11, 30 and 40, were exposed to polyamide particles with an average size of 50 µm, as exemplary dust particles.

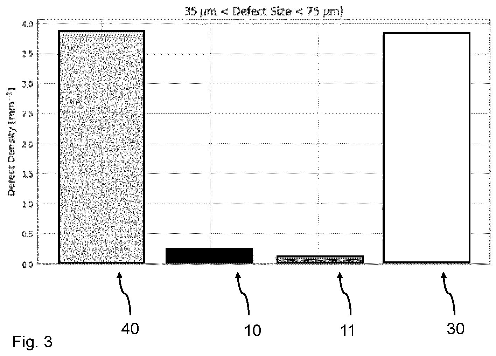

Fig. 3 shows a diagram illustrating the defect density on the surface of compounds 10, 11, 30 and 40. The defect densities were measured by the automatic xyz Lica microscope (Leica DM4000 M LED with a 20x DIC objective, providing defect sizes between 35 µm and 75 µm. The defect densities, also called particle densities, are a measure for the relative amount of dust particles, exemplified by polyamide particles, on the surfaces of the optical components 10, 11, 30 and 40. In these examples, the particle density indicates the density of polyamide dusts on the optical components.

As illustrated in Fig. 3, the comparative optical components 30 and 40 of the first and second comparative examples had high defect densities of more than 3.5 mm⁻². Optical component 10 of the first example revealed a defect density of 0.25 mm⁻². Optical component 11 of the modification of the first example had a defect density of 0.15 mm⁻². As a result, due to the TCO surface layers 18 of optical compounds 10 and 11, the surfaces of optical components 10 and 11 were decisively more dust repellent than the surfaces of comparative optical components 30 and 40. This effect is due to a charge dissipation capability at the surfaces of optical components 10 and 11, which was larger than the one at the surfaces of optical components 30 and 40, such that the surfaces of optical components 10 and 11 had a higher dust repellency.

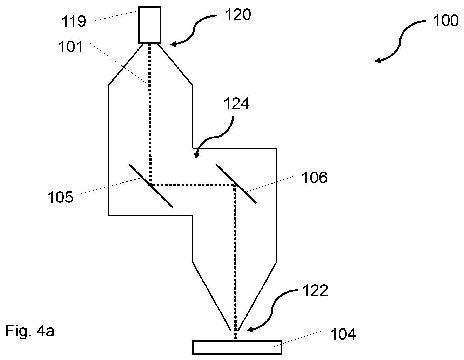

Fig. 4a schematically illustrates an example of a laser machining head 100 for laser machining a metal workpiece 104. The machining head 100 has a laser beam entry point 120 and a laser beam exit point 122. At the laser beam entry point 120 a laser source 119 having a power of at least 1 kW is or can be coupled to emit a laser beam 101 having e.g. a wavelength of 1070 nm. The laser machining head 100 has a laser guiding device 124 having optics including deflecting mirrors 105, 106 for guiding the laser beam 101 in between the laser beam entry point 120 and the laser beam exit point 122. Deflecting mirror 105 is configured as optical component 10 according to the first example, resulting in a low optical loss and a high Laser Induced Damage Threshold (LIDT) at mirror 105.

In operation of the laser machining head 100, laser beam 101 was introduced through laser beam entry point 120 and guided by deflecting mirrors 105 and 106 to and through the laser beam exit point 122 onto the workpiece 104, e.g. for cutting same. During the machining cycles, deflecting mirror 105 proved to be more resistant against damages caused by the laser beam 101 than deflecting mirror 106, and thus proved to have a higher LIDT. Further, in the laser machining head 100 a low optical loss and a high laser induced damage threshold at the optically effective surface of mirror 105 was realized. As a result, the longevity of the laser machining head 100 was promoted, since heat accumulation in mirror 105 resulting from optical losses by scattering and absorption in the coating on the optical surface as well as scattering and absorption of laser light caused by dust and particles on the optically effective surface of the mirror was reduced or avoided.

In a first modification of laser machining head 100, both deflecting mirrors 105 and 106 of the laser guiding device 124 were embodied as optical component 10. This modification of the laser machining head 100 showed a decisively increased reliability and longevity.

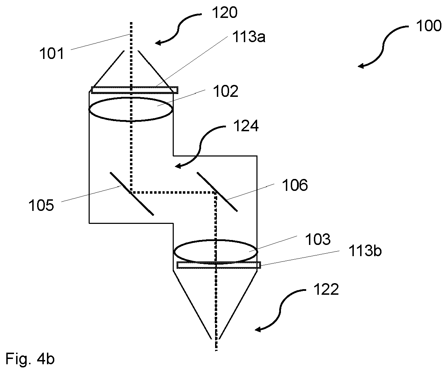

Fig. 4b illustrates a second modification of the laser machining head 100. The second modification includes, starting from the first modification of the laser machining head 100, in the laser guiding device 124 a protective glass 113a near the laser beam entry point 120 and another protective glass 113b near the laser beam exit point 122, both protective glasses being transmissive to at least the laser beam. In the path of the laser beam 101, the following additional transmissive optical components are provided: a collimating lens 102 between protective glass 113a and mirror 105, and a focussing lens 103 between mirror 106 and the protective glass 113b. The protective glasses 113a and 113b and the lenses 102 and 103 each have at the optical surfaces of their substrates a coating of a TCO surface layer formed of ITO and having a thickness of 9.9 µm, formed by IBS. Thus, every optical component of the laser guiding device 124 is provided with a dust repellent surface layer including ITO, thereby increasing the LIDT of the optical components, and improving the reliability and the longevity of the laser machining head 100 even more. In a further example, the second modification of the laser machining head 100 is additionally modified to have optical surfaces of the substrates of the protective glasses 113a and 113b and of the lenses 102 and 103, which are each coated by a TCO surface layer formed of IZO and having a thickness of 0.5 nm, formed by IBS. This further example also revealed a high LIDT of the optical components, and an improved reliability and the longevity of the laser machining head 100.

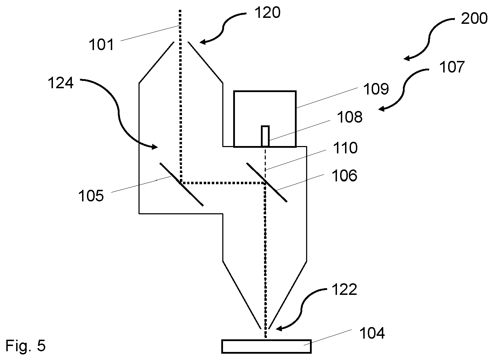

Fig. 5 schematically illustrates as an example a laser machining head 200 for laser machining a metal workpiece 104. The machining head 200 is configured according to the first modification of the laser machining head 100 and additionally includes a process monitoring device 107 including a sensor 108 and a camera 109. In contrast to mirror 106 of laser machining head 100, the mirror 106 of machining head 200 is a dichroic mirror reflecting the laser beam and transmitting UV, near infrared and IR light 110 to the sensor 108 and camera 109, the light 110 being emitted from the workpiece 104 though laser beam exit point 122 into the machining head. Thereby, a reliable laser machining including process monitoring is realized.

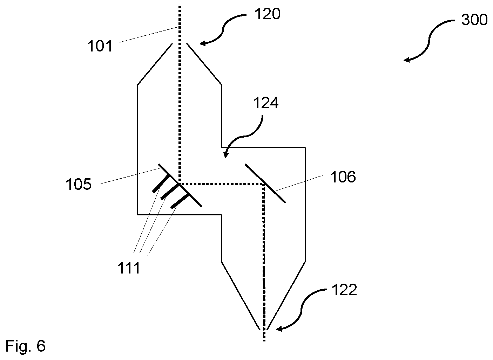

Fig. 6 schematically illustrates as another example a laser machining head 300 configured according to the first modification of the laser machining head 100 and additionally including a DBS system for oscillating the deflecting mirror 105 at frequencies above 0.5 kHz, whereby the laser beam 101 can be shaped. The DBS system includes piezo actuators 111, and the mirror 105 which is configured in this example to be moveable by the actuators 111, in order to oscillate the laser beam 101 laterally to its propagation direction. Due to the dust repellent TCO surface layer 18 on mirror 105, an overheating of the piezo system is effectively reduced or avoided.

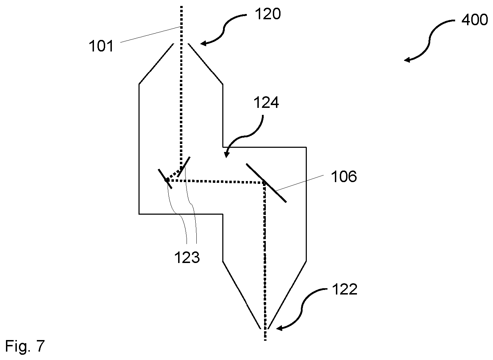

Fig. 7 schematically illustrates as a further example a laser machining head 400 which also includes a Dynamic Beam Shaping (DBS) system for oscillating the laser beam 101 in a direction lateral to its propagation direction. In contrast to laser machining head 300, the DBS system has instead of mirror 105 two movable galvo mirrors 123 each embodied as optical component 20 according to the second example. Actuators for oscillating the mirrors 123 are provided but not shown in Fig. 7. The galvo mirrors 123 can be cooperatively moved to oscillate the laser beam 101 laterally to its propagation direction for beam shaping. Due to the TCO surface layers 28 and the intermediate TCO layers 29 provided in the coatings of the mirrors 123, overheating of the DBS system is reduced or avoided.

In each example of the laser machining head or modifications thereof, due to the optical component(s) having the coating including the dust repellent TCO surface layer and in some examples including the intermediate TCO layer(s), heat accumulation in optical components of the laser guiding device resulting from optical losses, e.g. by scattering and absorption in the coating on the optical components, as well as resulting from scattering and absorption of laser light caused by dust and particles on the surface of the optical components is reduced or avoided.

### Reference signs

- 10: optical component
- 12: substrate
- 14: optical surface
- 16: coating
- 17: intermediate layer
- 18: dust repellent surface layer, surface layer
- 20: optical component
- 26: coating
- 28: dust repellent surface layer, surface layer
- 29: intermediate layer including at least one transparent conductive oxide
- 30: comparative optical component
- 40: comparative optical component
- 100: laser machining head
- 101: laser beam
- 102: lens
- 103: lens
- 104: metal workpiece
- 105: mirror
- 106: mirror
- 107: process monitoring device
- 108: sensor
- 109: camera
- 110: UV, VIS, IR light
- 111: piezo actuators
- 113a: protective glass
- 113b: protective glass
- 119: laser source
- 120: laser entry point
- 122: laser exit point
- 123: galvo mirrors
- 124: laser guiding device
- 200: laser machining head
- 300: laser machining head
- 400: laser machining head

## Claims

1. Optical component (10; 11; 20; 105; 106; 113a, 113b, 102, 103; 123) for guiding at least one laser beam emitted by a laser source of at least 1 kW, comprising a substrate (12) having at least one optical surface (14) and a coating (16; 26) on the optical surface;
wherein the coating has a dust repellent surface layer (18; 28) including at least one transparent conductive oxide (TCO) and having a thickness of less than 10 µm.

2. Optical component according to claim 1,
wherein the surface layer (18; 28) has a surface roughness of less than 0.5 nm.

3. Optical component according to any of the preceding claims,
wherein the coating (16) includes at least one intermediate layer (17; 29) between the substrate and the surface layer, the intermediate layer being selected from a dielectric layer, an optical functional layer, a low optical loss layer, a layer of low index of refraction, a layer of high index of refraction, a layer (29) including at least one transparent conductive oxide, and any combination thereof.

4. Optical component according to claim 3,
wherein at least one of the intermediate layers (17) selected from the dielectric layer, the optical functional layer, the low optical loss layer, the layer of low index of refraction, and the layer of high index of refraction and at least one of the intermediate layers (29) including at least one transparent conductive oxide is arranged between the substrate and the surface layer.

5. Optical component according to any of the preceding claims,
wherein the transparent conductive oxide is selected from Indium Tin Oxide (ITO), Indium Zinc Oxide (IZO), Gallium doped Zinc Oxide (GZO), In₂O₃:H (IOH), Zinc Oxide (ZnO), Tin Dioxide (SnO₂), Indium Oxide doped with Molybdenum (InO:Mo), Indium Oxide doped with Titanium (InO:Ti ), Aluminum-doped Zinc Oxide (AZO), Titanium-doped Zinc Oxide (ZnO:Ti), Antimony-doped Tin Oxide (ATO),Tantalum-doped Tin Oxide (SnO:Ta), Niobium-doped Tin Oxide (SnO:Nb), Fluorine-doped Tin Oxide (FTO), Nb-doped Titanium Dioxide (TiO₂:Nb), Zirconium doped indium oxide (InO:Zr), Zinc Tin Oxide (ZTO), Niobium doped Anatase (TiO₂: NTO), and any combination thereof.

6. Optical component according to any of the preceding claims,
wherein at least one layer of the surface layer and the at least one intermediate layer including a transparent conductive oxide has each an electrical resistivity less than 10¹² ohm/square.

7. Optical component according to any of claims 3 to 6,
wherein the surface layer (18; 28) and the least one intermediate layer (17; 29) form a stack on the optical surface, the stack having a thickness of 2 nm to 100 µm.

8. Optical component according to any of the preceding claims,
wherein at least one layer of the surface layer (18; 28) and the at least one intermediate layer (29) including a transparent conductive oxide is a layer provided in a position within the coating to interact with a minimum of the electrical field of the laser beam and having a thickness of 1 nm to 10 µm.

9. Optical component according to any of claims 3 to 8,
wherein two or more of the intermediate layers (17; 29) have different indices of refraction.

10. Optical component according to any of claims 3 to 9,
wherein two or more of the intermediate layers (17; 29) are arranged to have alternating low and high refractive indices.

11. Laser machining head (100; 200; 300; 400) for laser machining a metal workpiece (104) with at least one laser beam (101) emitted by a laser source (119) having a power of at least 1 kW, comprising
a laser beam entry point (120) and a laser beam exit point (122); and
a laser guiding device (10; 11; 20; 105, 106; 113a, 113b, 102, 103; 123) having optics for guiding the laser beam in between the laser beam entry point and the laser beam exit point; wherein the optics includes at least one optical component (10; 11; 20; 105; 106; 113a, 113b, 102, 103; 123) according to any of claims 1 to 10.

12. Laser machining head according to claim 11,
wherein the laser guiding device includes a dynamic beam shaping system (105, 111; 123) for dynamically oscillating the laser beam (101) in a direction lateral to its propagation direction.

13. Laser machining head according to any of claims 11 and 12,
wherein the optical component (10; 11; 20; 105, 106; 123) is an at least partially reflective optical component.

14. Laser machining head according to any of claims 11 to 13,
wherein the optical component (113a, 113b, 102, 103; 106) is an at least partially transmissive optical component.

15. Method for producing an optical component, the optical component configured for guiding a laser beam having laser energies of laser sources of 1kw or more, comprising providing a substrate (12) having at least one optical surface (14) (S1);
forming a coating (16; 26) on the at least one optical surface, the coating having a dust repellent surface layer (18; 28) (S2),
wherein the dust repellent surface layer (18; 28) is formed by deposition of a transparent conductive oxide (TCO) and is formed having a thickness of less than 10 µm (S3).
